# EUROPEAN PATENT APPLICATION

(11) **EP 1 323 401 A1**
(43) Date of publication of application: **02.07.2003**
(21) Application number: 01131022.4
(22) Date of filing: 29.12.2001
(51) Int. Cl.: A61G 5/06

(54) **Curb climber**

(71) Applicant: Pihsiang Machinery MFG. Co., Ltd., Hsin Feng Hsiang, Hsinchu County (TW)
(72) Inventor: Wu, Donald P.H., Hsin Feng Hsiang, Hsinchu County (TW)
(74) Representative: Basfeld, Rainer, Dr. Dipl.-Phys.

(57) **Abstract**

A miracle curb climber includes a casing having a top connecting bolt for screwing to a front or a rear axle of a walking aid, such as a handcart, a wheelchair, an electric wheelchair, a wheeled power chair, etc., at least one front pilot wheel and at least one main land-contacting wheel mounted into front and rear end of the casing, respectively, and at least one relaying wheel mounted in the casing between the pilot wheel and the land-contacting wheel. The front pilot wheel and the relaying wheel have diameters smaller than that of the main land-contacting wheel and are suspended in the air in front of the main land-contacting wheel, enabling the main land-contacting wheel to smoothly climb up a raised obstacle, such as a curb or a threshold, at a reduced angle of climbing without causing violent vibration or sway of the walking aid.

## Description

### BACKGROUND OF THE INVENTION

### 1. Field of the Invention

The present invention relates to a miracle curb climber, and more particularly to a miracle curb climber being screwed to a front or a rear axle of a walking aid, such as a handcart, a wheelchair, an electric wheelchair, a wheeled power chair, etc., to enable the walking aid to stably climb up and cross over a raised obstacle at a reduced angle of climbing.

### 2. Description of the Prior Art

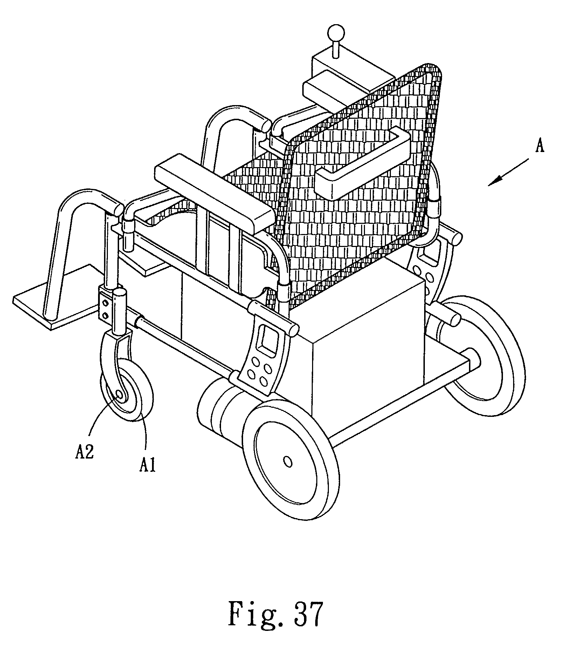

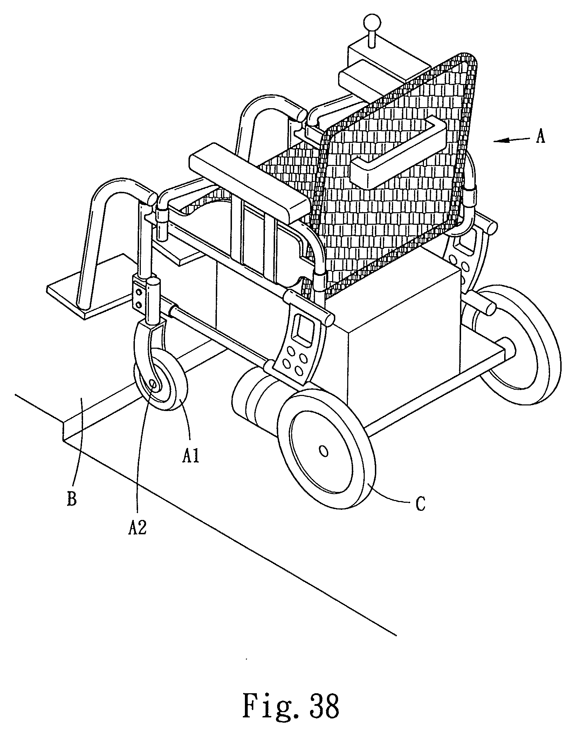

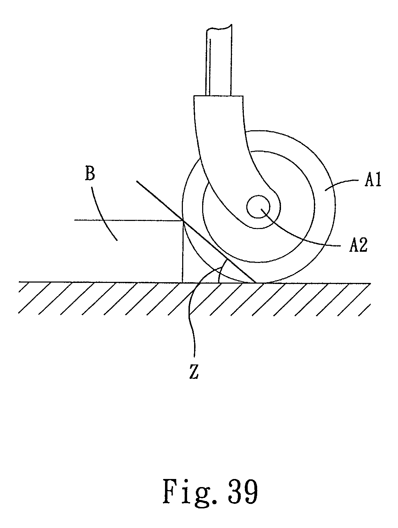

Handcarts, wheelchairs, electric wheelchairs, and wheeled power chairs are widely employed as walking aids to assist children, patients, and old people in walking. A common feature of these walking aids is they all are manually or electrically driven to move forward. For these walking aids to make turns smoothly, it is a common practice to provide them with front wheels smaller than rear wheels. However, the smaller front wheels prevent the walking aids from easily climbing up and crossing over a raised obstacle, such as a curb or a threshold. Fig. 37 shows a typical wheelchair A having front pilot wheels A1 and Fig. 38 shows the wheelchair A is about to cross a raised obstacle B. The front pilot wheels A1 of the wheelchair A encounter the obstacle B first. Since the front pilot wheels A1 usually have a small diameter, a distance between a wheel axle A2 of each front pilot wheel A1 and a ground surface is short. In the case the obstacle B has a height larger than a radius of the front pilot wheels A1, the latter would be stuck at the obstacle B and have difficulty in climbing up and crossing the obstacle B. To solve this problem, it is usually necessary to employ rear wheels F of the wheelchair A as supporting points to lift a front portion of the entire wheelchair A for the front pilot wheels A1 to contact at bottom surfaces with a top of the obstacle B. However, it is laborious and inconvenient to do so. And, in the case the obstacle B has a height slightly smaller than the radius of the front pilot wheels A1, the wheelchair A is usually shortly accelerated toward the obstacle B for the front pilot wheels A1 to climb over the obstacle B under an impulsive force. Please refer to Fig. 39. A line passing a first point at where a front edge of the front pilot wheel A1 initially contacts with the obstacle B and a second point at where the front pilot wheel A1 contacts with the ground together with the ground surface define an angle Z, that is referred to as an angle of climbing. The larger the angle of climbing Z is, the more difficult for the front pilot wheel A1 to climb up and cross the obstacle B. A considerably large impulsive force is needed for the front pilot wheels A1 to climb up the obstacle B when the angle of climbing Z is large. This large impulsive force tends to dangerously result in a deformed or even broken beam of the wheelchair A. Moreover, the impulsive force would also violently vibrate or sway the entire wheelchair A to endanger a user's safety.

It has been tried to provide an auxiliary power to the front pilot wheels A1 of the conventional wheelchair A for the latter to cross the obstacle B easier. However, the wheelchair A would become complicate in its structure and require increased cost of modification. For example, a differential may be mounted between the two front pilot wheels A1 to prevent the wheelchair A from tilting over while making a turn. However, the differential makes the wheelchair A more difficult to operate.

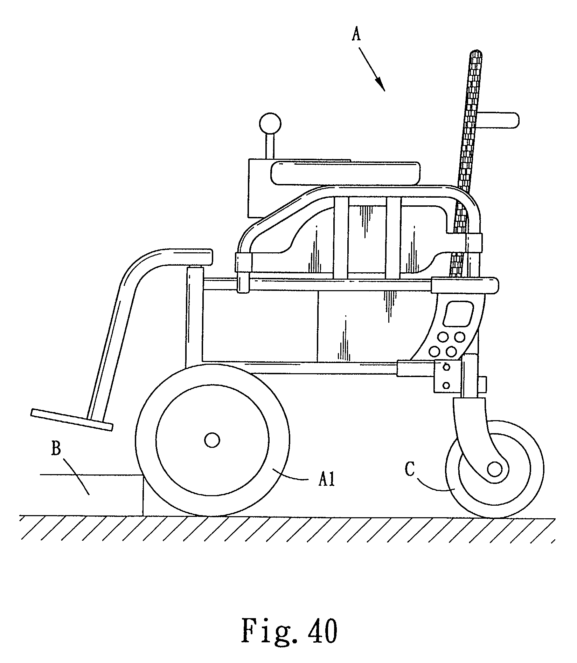

Fig. 40 shows another way for the wheelchair A to overcome a raised obstacle B. The wheelchair A shown in Fig. 40 is front-wheel driven and has two radius-increased front pilot wheels Al. Even with the large front pilot wheels A1, the wheelchair A must be accelerated for the front pilot wheels A1 to cross the obstacle B and pull the rear wheels F to climb up the obstacle B. In this case, the wheelchair A is subjected to impact twice and moves in a manner actually similar to backing a car. The front-wheel driven wheelchair A is therefore very difficult to steer and not widely accepted among the consumers.

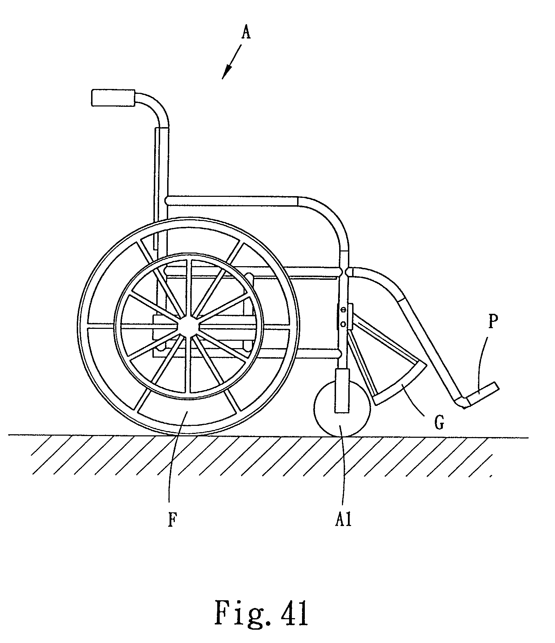

Fig. 41 shows a conventional rear-wheel driven wheelchair A having a curb climbing aid G mounted to a lower front of the wheelchair. A bottom of the curb climbing aid G would touch an obstacle B first and then works like a leverage to raise the front portion of the moving wheelchair A for the same to cross over the obstacle. However, the curb climbing aid G is useless unless the user of the wheelchair A is able to aim it at the obstacle. Since it is very difficult for a wheelchair user to aim the curb climbing aid G at the obstacle, the wheelchair A with the curb climbing aid G is not practical for use and not widely accepted.

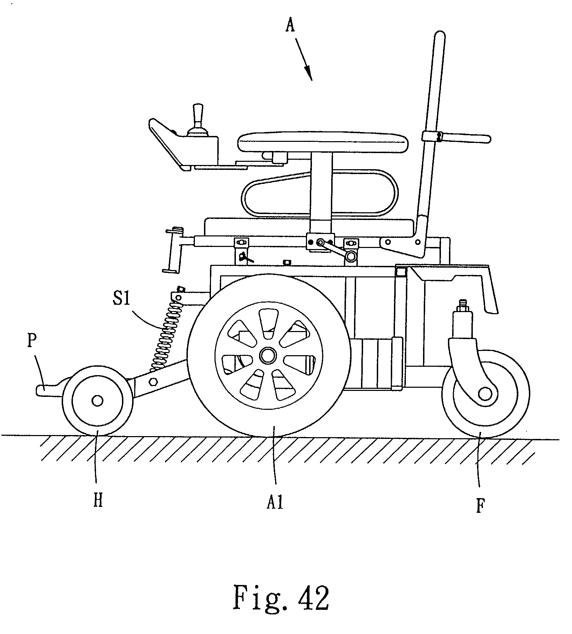

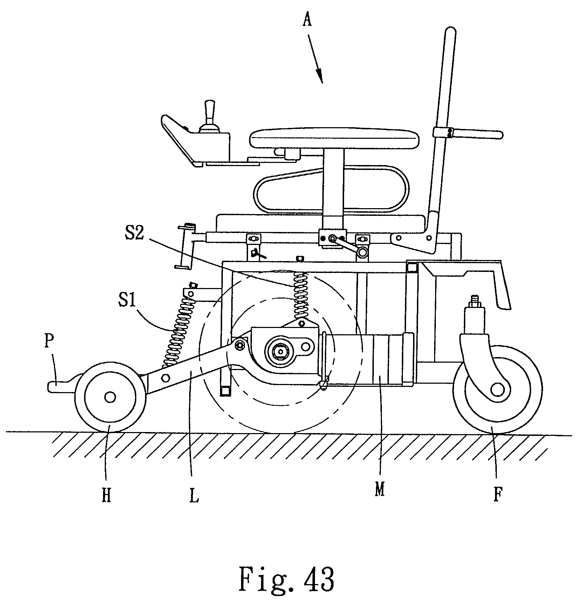

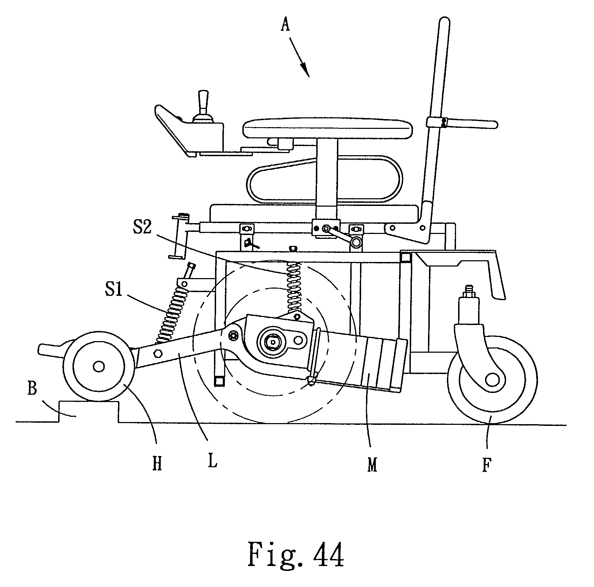

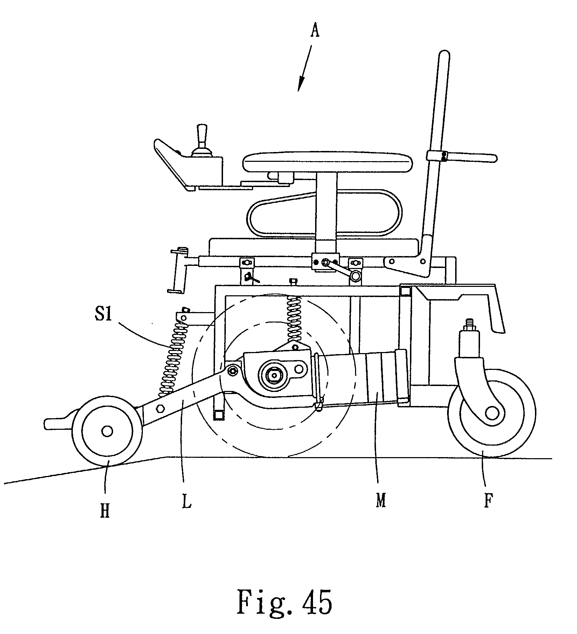

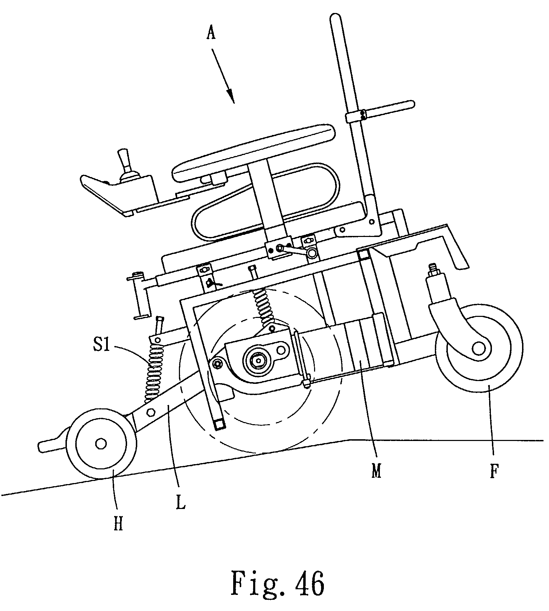

Pride Health Care Inc., an American firm, developed an improved wheelchair A having two front anti-tilt wheels H. Please refer to Figs. 42 to 46. The wheelchair A is a front-wheel driven vehicle having two big middle wheels A1 functioning as main driving wheels, and two rear followers F. Each of the two anti-tilt wheels H is fixed to a front end of a crank L. A middle portion of the crank L is pivotally connected to a motor M of the wheelchair A, and a rear end thereof is fixedly bound to a rear end of the motor M. The front anti-tilt wheels H and the motor M are further connected to a framework of the wheelchair A with springs S1 and S2, respectively. The provision of these springs S1, S2 causes the wheelchair A in moving to sway like a rocking chair. Whenever the wheelchair A is started and stopped, it sways to and fro in an extremely unstable state, preventing a user from steering it smoothly. Moreover, when the wheelchair A moves on a rough road and the front anti-tilt wheels H are about to pass over a raised obstacle B, the user has to accelerate the wheelchair A in advance to spring up the anti-tilt wheels H under an impulsive force and thereby cross over the obstacle. In the event the obstacle is higher than a radius of the front anti-tilt wheels H, the wheels H would become useless at all. Further, when the wheelchair A moves down a slope, the front anti-tilt wheels H are initially pushed downward by the springs S1 to contact with the slope and keep the wheelchair A in a stable state. However, when the main driving wheels A1 move onto the slope, too, the crank L having a rear end fixedly connected to the motor M would suddenly become inclined to suspend the followers F in the air, as shown in Figs. 45 and 46. Even though the followers F are suspended in the air for only a very short time, such instantaneous suspension would panic the user of the wheelchair A.

Moreover, when the user gets on or off the wheelchair A by lightly stepping at front footplates P, the wheelchair A tends to instantaneously tilt forward to endanger the user.

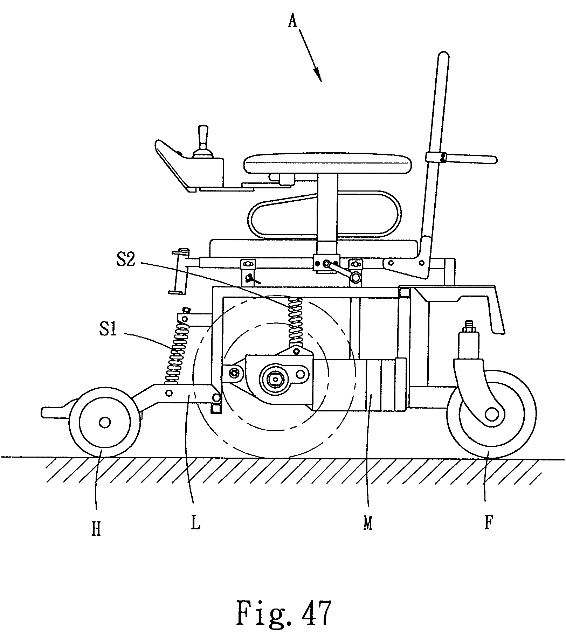

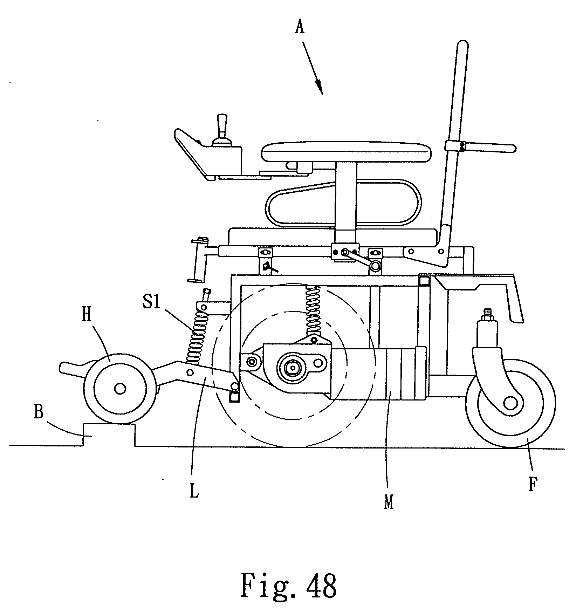

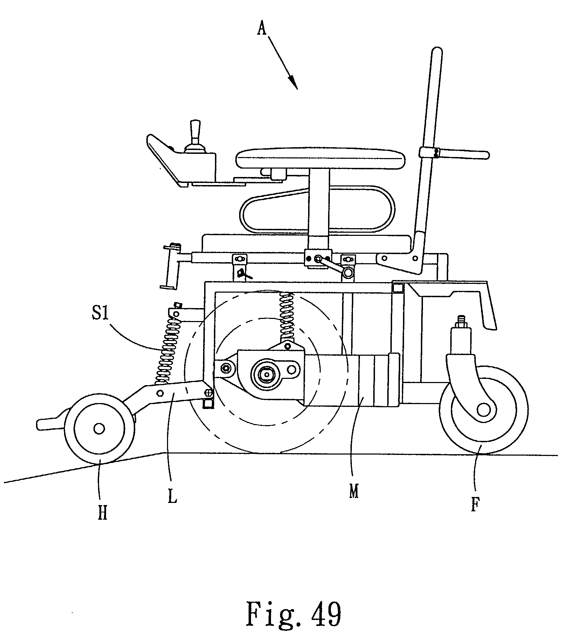

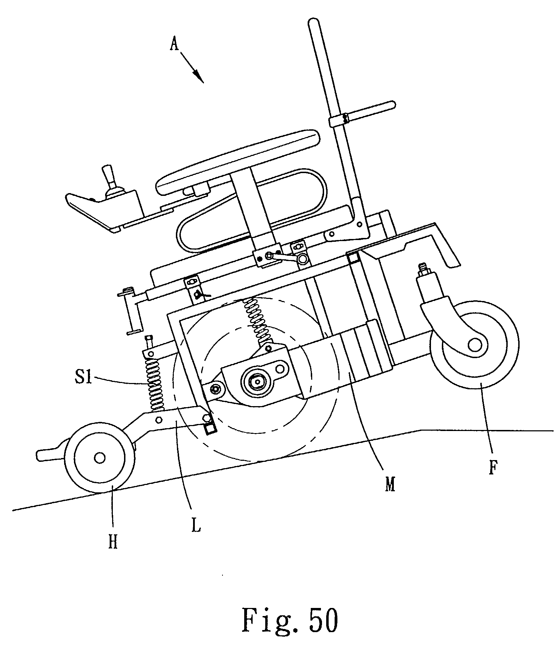

The Pride Health Care Inc. also developed a simplified version of the above-described wheelchair A, as shown in Figs. 47 to 50. In this simplified version, the cranks L are fixed at rear ends to a lower front support of the wheelchair A. The anti-tilt wheels H are also connected to the framework of the wheelchair A through shock-absorbing springs S1. However, the simplified structure does not eliminate the above-mentioned drawbacks.

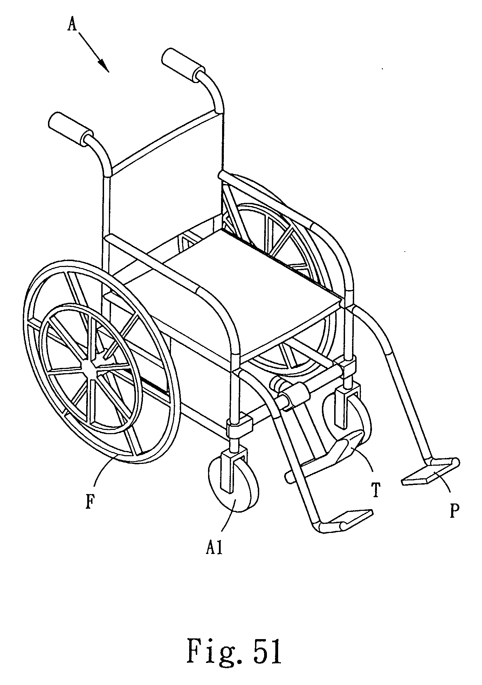

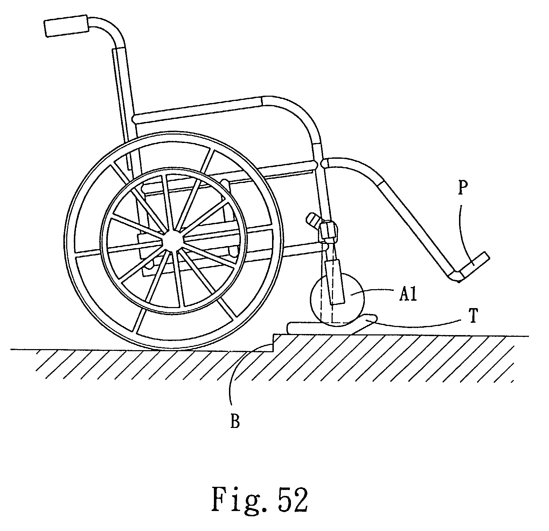

Figs. 51 and 52 illustrate a still further conventional wheelchair A that includes a T-shaped auxiliary leg T, looking like an artificial foot, movably connected to a lower front of the wheelchair A between the two footplates P. A spring is mounted in an upper end of the auxiliary leg T coupled to the wheelchair A, allowing the auxiliary leg T to be normally held at a suspended position without contacting with the ground to hinder the movement of the wheelchair A. When the wheelchair A encounters an obstacle, a lower end of the T-shaped auxiliary leg T would touch the obstacle B first and turns clockwise about the upper end coupled to the wheelchair A. When the wheelchair A keeps moving forward, the auxiliary leg T is moved into a vertical position and raises two front wheels A1 of the wheelchair A to suspend them in the air, allowing the front wheels A1 to pass over the obstacle. When the rear wheels F keep moving forward, the auxiliary leg T is brought to pivotally turn backward. After the wheelchair A has fully crossed over the obstacle B, the auxiliary leg T is sprung to a home position by the spring in the upper end.

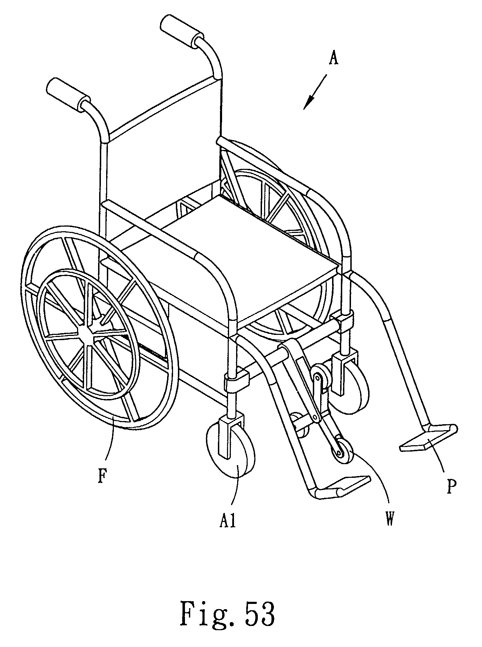

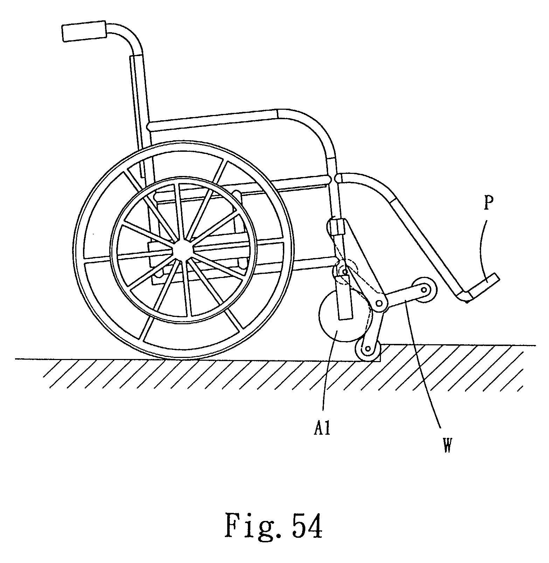

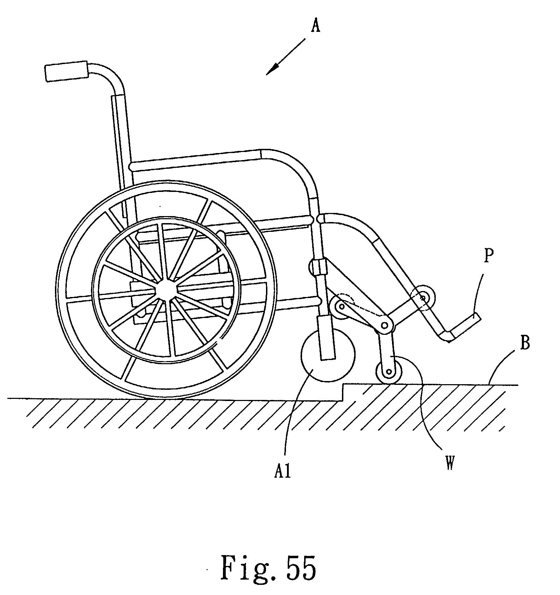

Figs. 53 to 55 illustrate another wheelchair A having an elastically movable three-wheeled auxiliary leg W connected to a lower front thereof. Again, the three-wheeled auxiliary leg W does not contact with the ground in normal time, lest it should hinder the movement of the wheelchair A. When the wheelchair A encounters an obstacle, one of the three wheels of the auxiliary leg W would touch the obstacle B first. The auxiliary leg W would then rotate about its axle for other wheels thereof to sequentially climb up the obstacle B. When the auxiliary leg W climbs up the obstacle B, it raises the front wheels A1 for the same to cross over the obstacle B. When the front wheels A1 have fully climbed up the obstacle and become landed again, the three-wheeled auxiliary leg W returns to its suspended state in front of the wheelchair A. A common drawback of the two auxiliary legs T and W is they together with the rear wheels F to provide only three points that contact with the ground, subjecting the whole wheelchair A to an unstable state. Moreover, such auxiliary leg T or W must be aimed at the obstacle to work successfully. Wheelchairs with such auxiliary leg T or W are therefore not easily controllable and not widely introduced into the markets.

### SUMMARY OF THE INVENTION

It is therefore a primary object of the present invention to provide a miracle curb climber formed from sequentially arranged and gradually enlarged front pilot wheels, relaying wheels, and main land-contacting wheels for connecting to front or rear axle of a walking aid, such as a handcart, a wheelchair, an electric wheelchair, a wheeled power chair, etc., so that the walking aid may be stably handled to smoothly climb up a raised obstacle, such as a curb or a threshold, at a reduced angle of climbing.

Another object of the present invention is to provide a miracle curb climber formed from sequentially arranged and gradually enlarged front pilot wheels, relaying wheels, and main land-contacting wheels. The front pilot wheels and the relaying wheels are suspended in the air before the main land-contacting wheels to create a reduced angle of climbing for the entire miracle curb climber to climb up a raised obstacle without causing violent vibration or sway of the entire wheelchair.

A further object of the present invention is to provide a miracle curb climber having a casing and a connecting bolt for freely connecting to a front or a rear axle of a walking aid, such as a handcart, a wheelchair, an electric wheelchair, a wheeled power chair, etc., at low costs of modification.

To achieve the above and other objects, the miracle curb climber of the present invention mainly includes a casing having a top connecting bolt for screwing to a front or a rear axle of a walking aid, such as a handcart, a wheelchair, an electric wheelchair, a wheeled power chair, etc., at least one front pilot wheel and at least one main land-contacting wheel mounted into front and rear end of the casing, respectively, and at least one relaying wheel mounted in the casing between the pilot wheel and the land-contacting wheel. The front pilot wheel and the relaying wheel have diameters smaller than that of the main land-contacting wheel and are suspended in the air in front of the main land-contacting wheel, so that a reduced angle of climbing is formed between the main land-contacting wheel and the ground for the main land-contacting wheel to smoothly climb up a raised obstacle, such as a curb or a threshold, without causing violent vibration or sway of the walking aid.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein
Fig. 1 is an assembled perspective view of a miracle curb climber according to a first embodiment of the present invention;
Fig. 2 is an exploded perspective view of Fig. 1;
Fig. 3 is a bottom view of Fig. 1;
Fig. 4 is a side view showing an angle of climbing defined by a front pilot wheel, a relaying wheel, and a rear pilot wheel of the miracle curb climber of Fig. 1 and a raised obstacle;
Fig. 5 is a side view showing another angle of climbing defined by the rear pilot wheel of the miracle curb climber of the present invention and a raised obstacle;
Fig. 6 shows an example of mounting the miracle curb climber according to the first embodiment of the present invention on a walking aid in the form of an electric wheelchair;
Fig. 7 is a perspective view showing the miracle curb climber of the present invention mounted on the electric wheelchair of Fig. 6 is ready to climb up a raised obstacle;
Fig. 8 is a side view showing the front pilot wheel of the miracle curb climber of the present invention mounted on the electric wheelchair of Fig. 7 is in contact with a top of the raised obstacle;
Fig. 9 is a side view showing the front pilot wheel of Fig. 8 has climbed up the top of the raised obstacle;
Fig. 10 is a side view showing the relaying wheel of the miracle curb climber of the present invention has climbed up the top of the raised obstacle;
Fig. 11 is a side view showing the rear pilot wheel of the miracle curb climber of the present invention has climbed up the top of the raised obstacle;
Fig. 12 is a perspective view showing the entire miracle curb climber of the present invention has fully climbed up the raised obstacle;
Fig. 13 shows a first example of mounting the miracle curb climber according to the first embodiment of the present invention on a walking aid in the form of a wheelchair;
Fig. 14 shows another example of mounting the miracle curb climber according to the first embodiment of the present invention on the wheelchair;
Fig. 15 is an assembled perspective view of a miracle curb climber according to a second embodiment of the present invention;
Fig. 16 is an exploded perspective view of Fig. 15;
Fig. 17 is a perspective view showing an example of mounting the miracle curb climber according to the second embodiment of the present invention on a walking aid;
Fig. 18 is a side view of a miracle curb climber according to a third embodiment of the present invention;
Fig. 19 is a bottom view of Fig. 18;
Fig. 20 is a side view showing an example of mounting the miracle curb climber according to the third embodiment of the present invention on a walking aid;
Fig. 21 is a side view showing a miracle curb climber according to a fourth embodiment of the present invention;
Fig. 22 is a side view showing an example of mounting the miracle curb climber according to the fourth embodiment of the present invention on a walking aid;
Fig. 23 is a bottom view of a miracle curb climber according to a fifth embodiment of the present invention;
Fig. 24 is a side view of the miracle curb climber of Fig. 23;
Fig. 25 is a side view of a miracle curb climber according to a sixth embodiment of the present invention;
Fig. 26 is a bottom view of the miracle curb climber of Fig. 25;
Fig. 27 shows a miracle curb climber according to a seventh embodiment of the present invention;
Fig. 28 is an exploded perspective view of Fig. 27;
Fig. 29 is a fragmentary, enlarged elevational view showing the location of the belt of Fig. 27 in the annular groove of the rear pilot wheel;
Fig. 30 is a perspective view showing an example of mounting the miracle curb climber according to the seventh embodiment of the present invention on a walking aid;
Fig. 31 is a side view of a miracle curb climber according to an eighth embodiment of the present invention;
Fig. 32 is a perspective view of a miracle curb climber according to a ninth embodiment of the present invention;
Fig. 33 is an exploded perspective view of Fig. 32;
Fig. 34 is a fragmentary, enlarged elevational view showing the location of the toothed belt of Fig. 33 in the annular groove of the rear pilot wheel;
Fig. 35 is a perspective view showing an example of mounting the miracle curb climber according to the ninth embodiment of the present invention on a walking aid;
Fig. 36 is a side view of a miracle curb climber according to a tenth embodiment of the present invention;
Fig. 37 is a perspective view showing the structure of a conventional wheelchair;
Fig. 38 shows the conventional wheelchair of Fig. 37 is about to climb up a raised obstacle;
Fig. 39 is a fragmentary, enlarged side view showing a front pilot wheel of the conventional wheelchair of Fig. 37 encountered with a raised obstacle;
Fig. 40 shows the structure of a conventional front-wheel drive wheelchair;
Fig. 41 shows a conventional wheelchair equipped with a curb climbing aid;
Fig. 42 is side view showing a conventional wheelchair with front anti-tilt wheels;
Fig. 43 is similar to Fig. 42 with the main driving wheel thereof removed therefrom to better show the connection of the front anti-tilt wheel to the wheelchair;
Fig. 44 is a side view showing the wheelchair of Fig. 42 climbs up a raised obstacle;
Fig. 45 is a side view showing the front anti-tilt wheel of the wheelchair of Fig. 42 moves down a slope;
Fig. 46 shows the wheelchair of Fig. 45 moves down the slope with rear wheels thereof suspended in the air;
Fig. 47 is a side view showing another conventional wheelchair equipped with front anti-tilt wheels;
Fig. 48 is a side view showing the wheelchair of Fig. 47 climbs up a raised obstacle;
Fig. 49 is a side view showing the front anti-tilt wheel of the wheelchair of Fig. 47 moves down a slope;
Fig. 50 shows the wheelchair of Fig. 49 moves down the slope with rear wheels thereof suspended in the air;
Fig. 51 is a perspective view of a conventional wheelchair having a T-shaped auxiliary leg mounted to a lower front thereof;
Fig. 52 is a side view showing the wheelchair of Fig. 51 climbs up a raised obstacle with the help of the T-shaped auxiliary leg;
Fig. 53 is a perspective view of another conventional wheelchair having a movable three-wheeled auxiliary leg mounted to a lower front thereof;
Fig. 54 is a side view showing the wheelchair of Fig. 53 is about to climb up a raised obstacle with the help of the three-wheeled auxiliary leg; and
Fig. 55 is a side view showing the wheelchair of Fig. 54 has climbed up the raised obstacle with the help of the three-wheeled auxiliary leg.

### DETAILED DESCRIPTION OF THE PREFERRED EMBODIMENTS

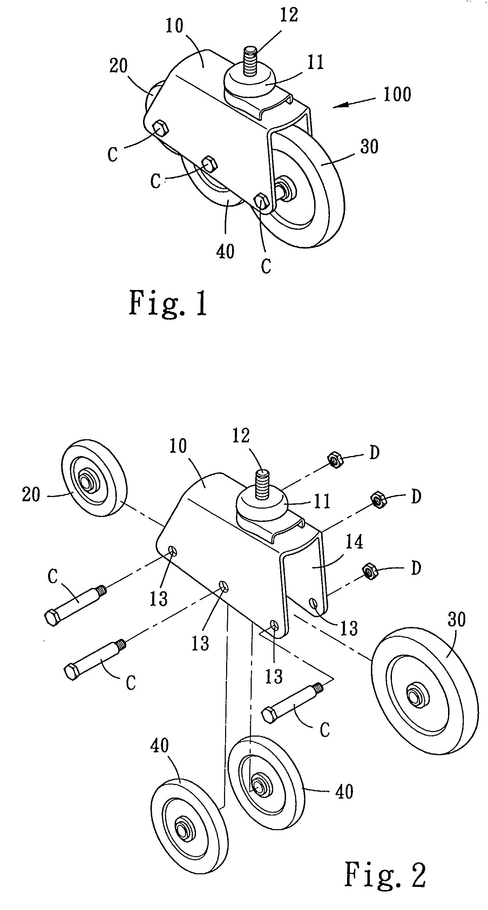

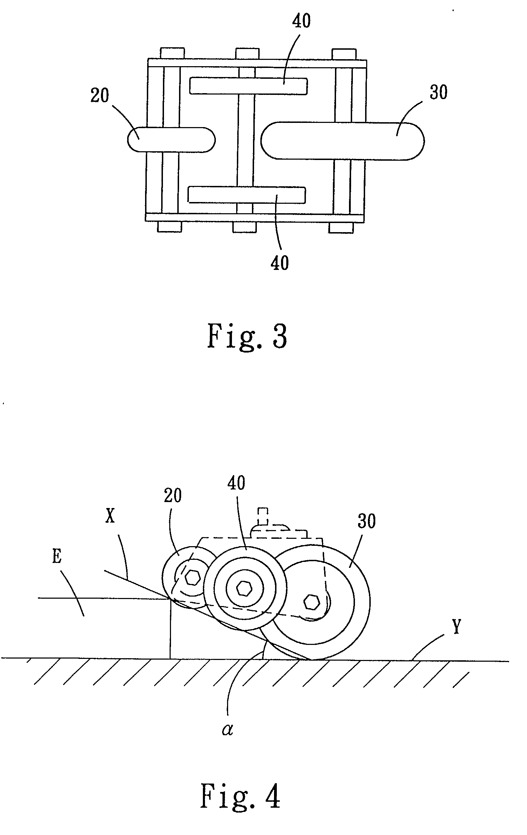

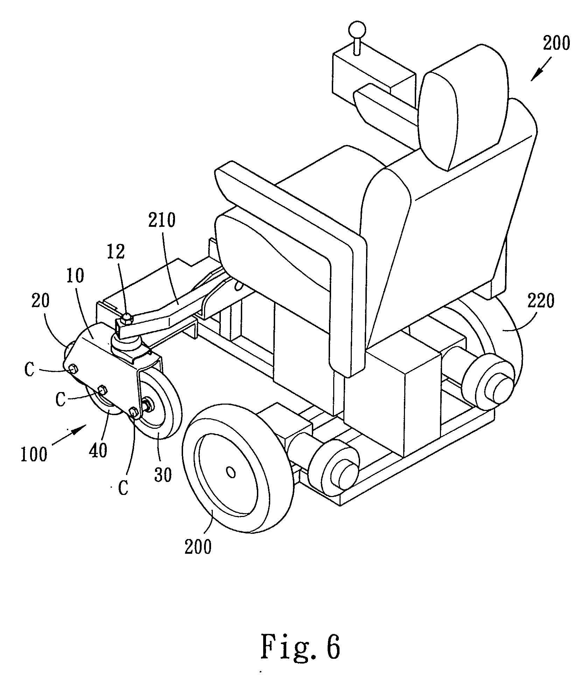

Please refer to Figs. 1 to 3 that are assembled perspective, exploded perspective, and bottom views, respectively, of a miracle curb climber 100 according to a first embodiment of the present invention. As shown, the miracle curb climber 100 mainly includes a casing 10, on a top of which there is provided with at least one connecting seat 11 having an upward projected connecting bolt 12 for screwing into an end of a front axle 210 of a walking aid 200 (see Fig. 6), at least a front pilot wheel 20 and a main land-contacting wheel 30, and at least a pair of relaying wheels 40. The casing 10 is symmetrically formed at two sidewalls with a plurality of pairs of mounting holes 13 and defines an internal wheel mounting space 14. The front pilot wheel 20 and the main land-contacting wheel 30 are mounted in the casing 10 to locate at front and rear ends, respectively, of the wheel mounting space 14 by means of supporting bolts C extended through a front and a rear pair of the mounting holes 13 to engage with nuts D. Each of the supporting bolts C and a corresponding nut D together provide a supporting wheel axle unit. The at least one pair of relaying wheels 40 are also mounted in the casing 10 to locate between the front pilot wheel 20 and the main land-contacting wheel 30 by means of supporting bolts C extended through corresponding ones of the mounting holes 13 and nuts D. As can be seen from Fig. 3 that is a bottom view of the miracle curb climber 100 of Fig. 1, the pair of relaying wheels 40 are longitudinally located between and transversely located at two sides of the front pilot wheel 20 and the main land-contacting wheel 30, such that front and rear edges of the relaying wheels 40 overlap a rear edge of the front pilot wheel 20 and a front edge of the main land-contacting wheel 30, respectively, in the longitudinal direction. This arrangement effectively shortens a wheelbase between the front pilot wheel 20 and the main land-contacting wheel 30 to properly reduce the space occupied by the miracle curb climber 100.

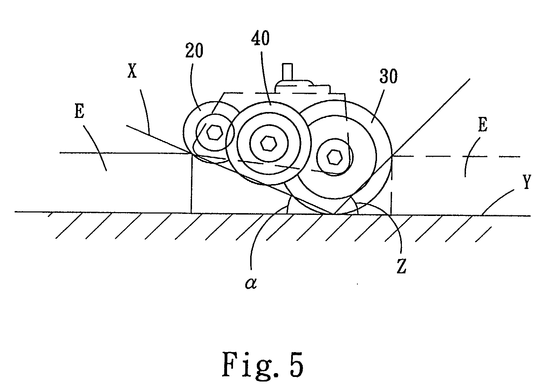

The front pilot wheel 20, the relaying wheels 40, and the main land-contacting wheel 30 of the miracle curb climber 100 of Fig. 1 have diameters that are increased at predetermined ratios. After these wheels are mounted on the casing 10 in the wheel-mounting space 14, the main land-contacting wheel 30 is always in contact with the ground while the front pilot wheel 20 and the relaying wheels 40 are suspended in the air. Please refer to Fig. 4. When the miracle curb climber 100 is located in front of a raised obstacle E, a line X passing a point at where the front pilot wheel 20 initially contacts with the raised obstacle E and a point at where the main land-contacting wheel 30 contacts with the ground and the ground surface Y together define an angle of climbing α between them. The angle of climbing α could be varied by adjusting the diameters of the front pilot wheel 20, the relaying wheels 40, and the main land-contacting wheel 30, or by adjusting heights of the pairs of mounting holes 13 on the casing 10. Please also refer to Fig. 5. A line X' passing a point at where the main land-contacting wheel 30 contacts with the ground surface Y and a point at where the main land-contacting wheel 30 directly contacts with a raised obstacle E together with the ground surface Y define another angle of climbing Z between them. It can be found that the angle of climbing α is smaller than the angle of climbing Z. A smaller angle of climbing obviously facilitates easier climbing up of a raised obstacle. With this fact in mind, the miracle curb climber 100 of the present invention is so designed to reduce as much as possible the angle of climbing α.

Fig. 6 is a perspective view showing an example of mounting miracle curb climbers 100 of Fig. 1 on a walking aid 200 in the form of an electric wheelchair to serve as two front pilot wheels of the wheelchair. However, it is understood that the walking aid 200 is not necessarily an electric wheelchair but may be a handcart, a wheelchair or a wheeled power chair that is functionally equivalent to the electric wheelchair.

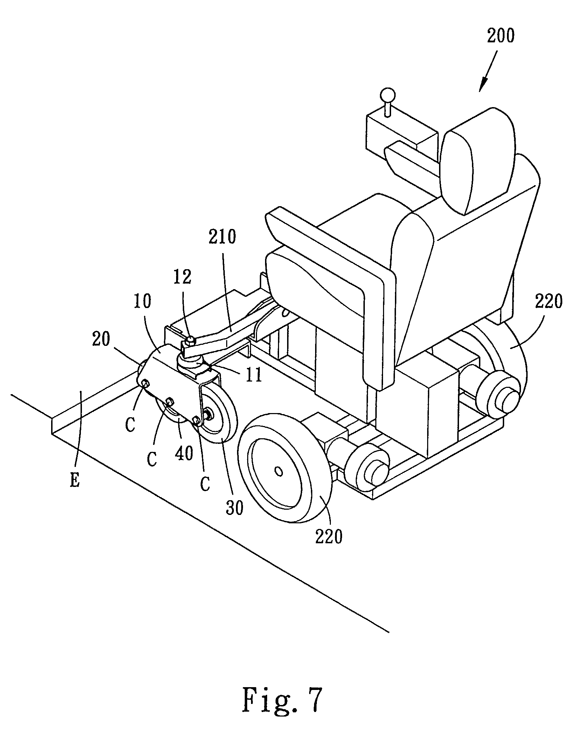

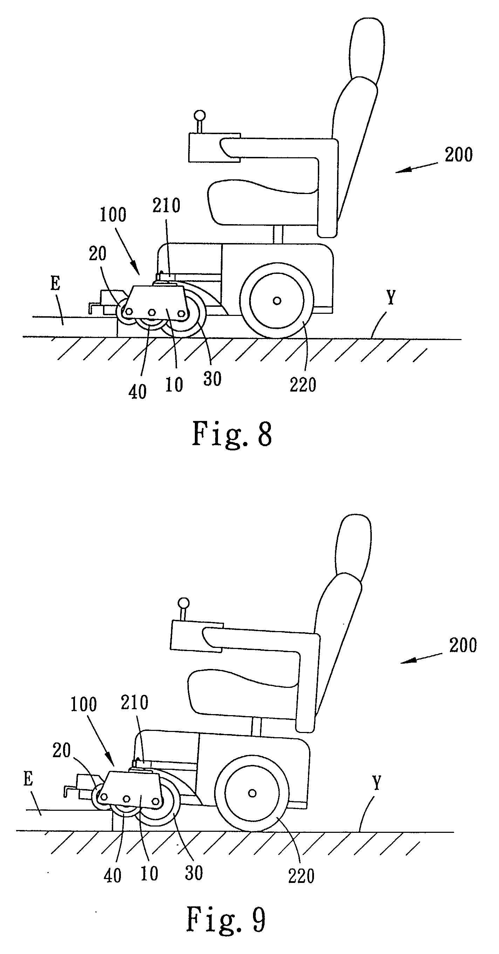

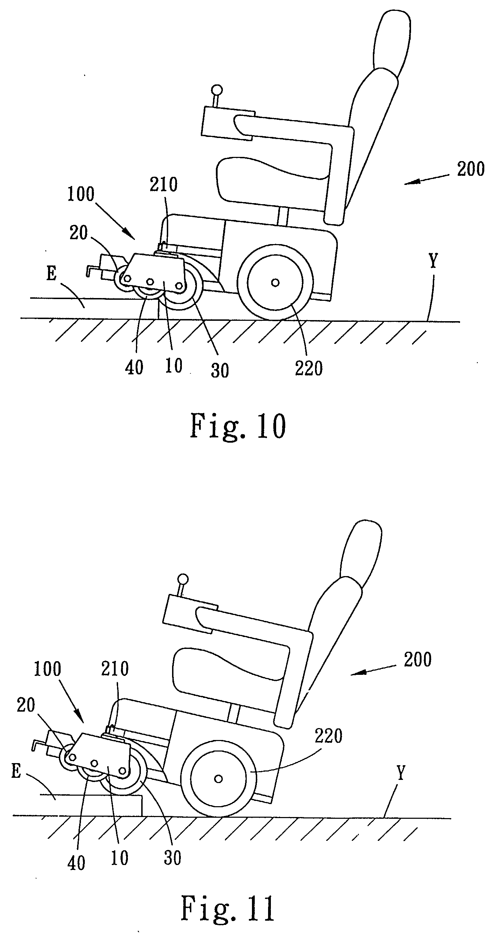

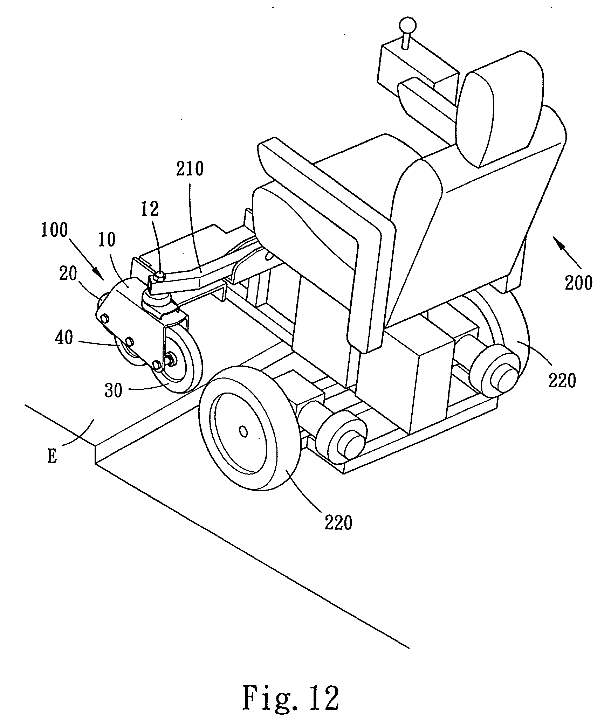

Figs. 7 to 12 show the course in which the walking aid 200 of Fig. 6 using the miracle curb climbers 100 of Fig. 1 as the front pilot wheels climbs up a raised obstacle E. Figs. 7 and 8 are perspective and side views, respectively, showing the miracle curb climber 100 of Fig. 1 is about to climb up the raised obstacle E. It is noted the main land-contacting wheel 30 and two rear wheels 220 of the walking aid 200 are in contact with the ground Y at the same time. As previously described with reference to Fig. 4, the miracle curb climber 100 is designed to enable a smaller angle of climbing α and the front pilot wheel 20 thereof is at a high position relative to the raised obstacle E, the front pilot wheel 20 could therefore easily climb over a top of the raised obstacle E, as shown in Fig. 9. With a push from the rear wheels 220 of the electric wheelchair 200, the front pilot wheel 20 and the relaying wheels 40 of the miracle curb climber 100 are continuously moved forward to climb over the top of the raised obstacle E, as shown in Figs. 9 and 10. Thereafter, the main land-contacting wheel 30 is also moved forward by the rear wheels 220 to climb over the raised obstacle E, as shown in Figs. 11 and 12. Due to the reduced angle of climbing α and a rolling friction relation of the wheels 20, 40 and 30 of the miracle curb climber 100 with the raised obstacle E in the course of climbing, the walking aid 200 is allowed to smoothly pass the raised obstacle E without causing violent vibration and sway to endanger a user's safety.

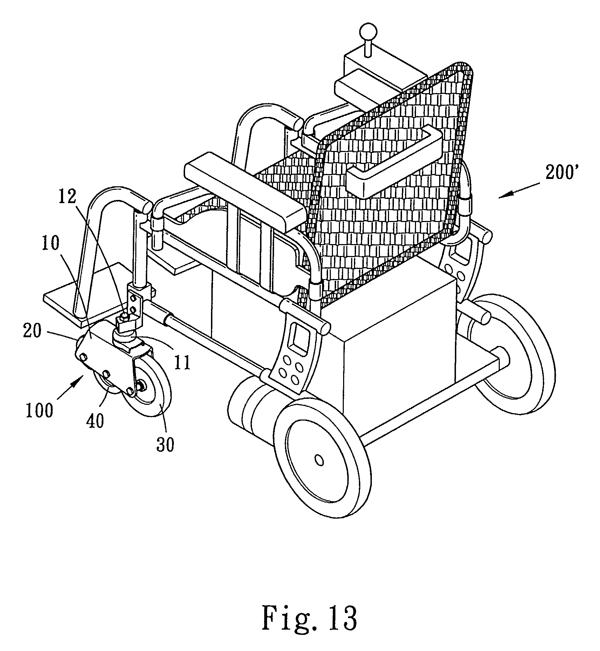

Fig. 13 shows an example of mounting the miracle curb climber 100 of Fig. 1 on a walking aid 200' in the form of a conventional wheelchair. In this example, the wheelchair 200' is rear-wheel driven and two miracle curb climbers 100 of Fig. 1 are directly screwed to two front-wheel supports of the conventional wheelchair 200' without causing too much labor and time costs of modifying the wheelchair. A user or an attendant of the wheelchair 200' could effortlessly manipulate the wheelchair 200' for the miracle curb climbers 100 to climb up a raised obstacle E in the same manner shown in Figs. 7 to 12.

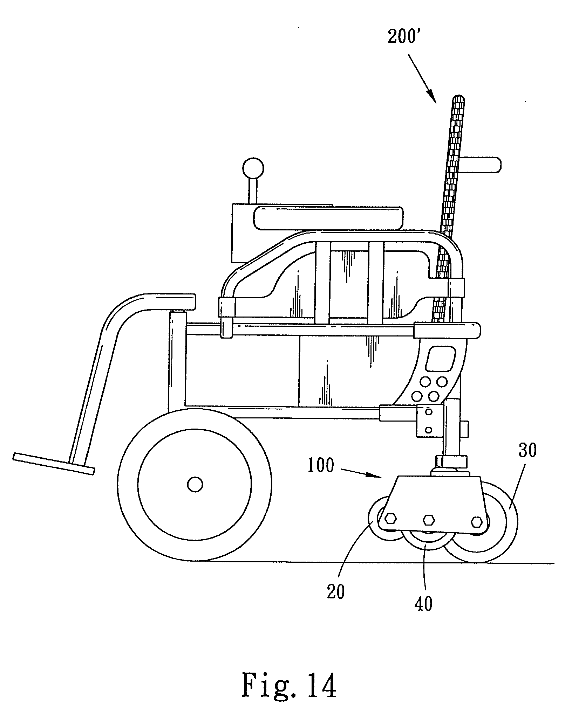

Fig. 14 shows another example of mounting the miracle curb climber 100 of Fig. 1 on the conventional wheelchair 200'. In this example, the wheelchair 200' is front-wheel driven and two miracle curb climbers 100 of Fig. 1 are directly screwed to two rear-wheel supports of the conventional wheelchair 200'. As in the previous example, a user or an attendant of the front-wheel driven wheelchair 200' could effortlessly manipulate the wheelchair 200' for the miracle curb climbers 100 to climb up a raised obstacle E in the same manner shown in Figs. 7 to 12.

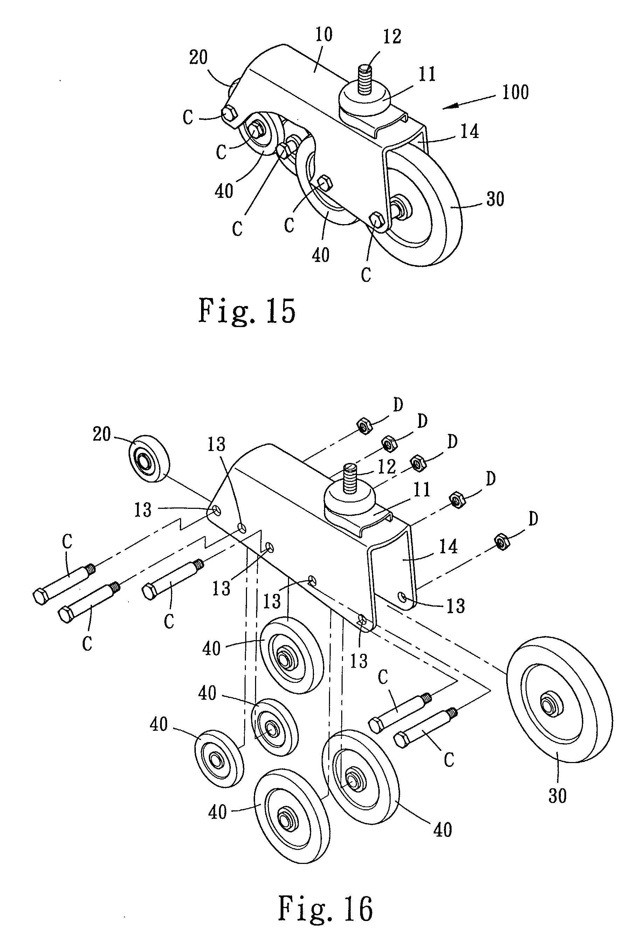

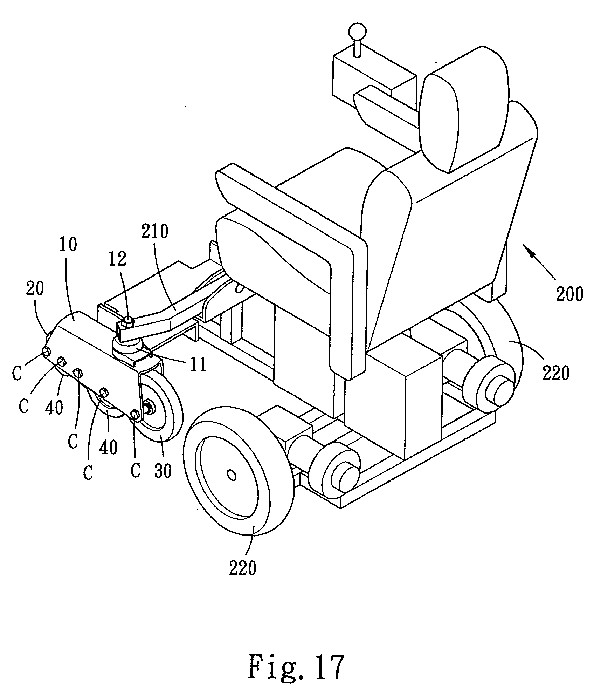

Figs. 15 and 16 are assembled and exploded perspective views, respectively, of a miracle curb climber 100 according to a second embodiment of the present invention, and Fig. 17 is a perspective view showing an example of mounting the miracle curb climber 100 of the second embodiment on a walking aid 200. The miracle curb climber 100 of the second embodiment is different from that of the first embodiment shown in Figs. 1 to 6 in that its casing 10 includes two more pairs of mounting holes 13 than the latter and the number of the relaying wheels 40 is increased from two to five. More specifically, two of the five relaying wheels 40 in a pair are located behind and at two sides of the front pilot wheel 20, another two of the five relaying wheels 40 in a pair are located in front of and at two sides of the main land-contacting wheel 30, and the last one of the five relaying wheels 40 is longitudinally and transversely located between the above-mentioned two pairs of relaying wheels 40. This arrangement enables a further reduced angle of climbing α and an even heightened front pilot wheel 20, as compared to the first embodiment of the present invention, and is therefore more suitable for climbing up a steep obstacle E, such as a threshold. The miracle curb climber 100 of the second embodiment also enables the walking aid 200 to steer in a more stable manner.

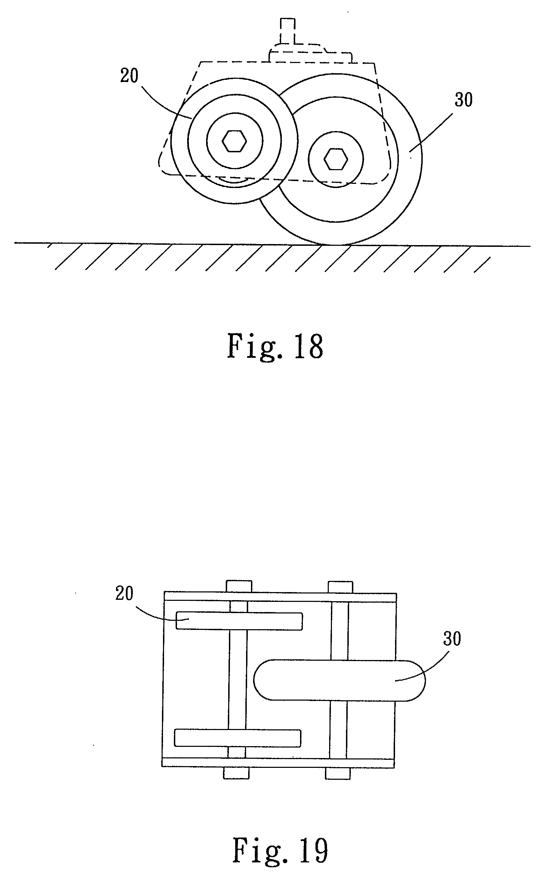

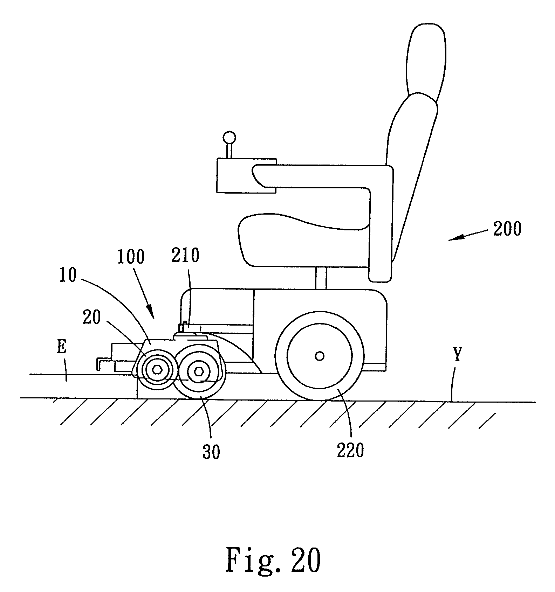

Figs. 18 and 19 are side and bottom views, respectively, of a miracle curb climber 100 according to a third embodiment of the present invention, and Fig. 20 is a side view showing an example of mounting the miracle curb climber of the third embodiment on a walking aid 200. The miracle curb climber 100 of the third embodiment is different from that of the first embodiment shown in Figs. 1 to 6 in that its casing 10 includes only two pairs of mounting holes 13 for mounting a pair of front pilot wheels 20 and a main land-contacting wheels 30, which is transversely located between the two front pilot wheels 20, and the relaying wheels 40 are omitted. Rear edges of the two front pilot wheels 20 overlap a front edge of the main land-contacting wheel 30 to reduce the space occupied by the miracle curb climber 100. The miracle curb climber 100 of the third embodiment also enables a reduced angle of climbing α and is more suitable for climbing up a less steep obstacle E to ensure a stable steering of the walking aid 200.

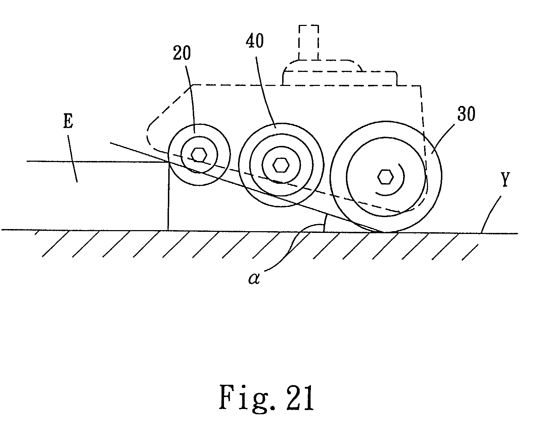

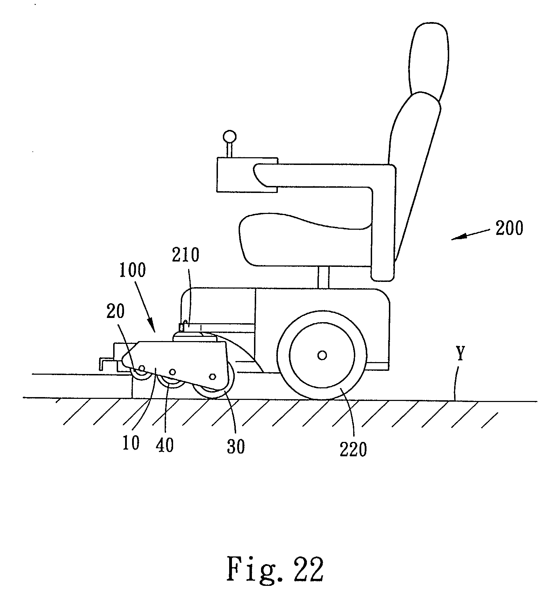

Fig. 21 is a side view of a miracle curb climber 100 according to a fourth embodiment of the present invention, and Fig. 22 shows an example of mounting the miracle curb climber 100 of the fourth embodiment on a walking aid 200. The miracle curb climber 100 of the fourth embodiment is different from that of the first embodiment shown in Figs. 1 to 6 in that it includes only one single relaying wheel 40 instead of a pair of relaying wheels 40, and the only one relaying wheel 40 is located between the front pilot wheel 20 and the main land-contacting wheel 30, so that the three wheels 20, 40, 30 are sequentially arranged in one line. The miracle curb climber 100 of the fourth embodiment also enables a reduced angle of climbing α and operates in a manner the same as that of the first embodiment.

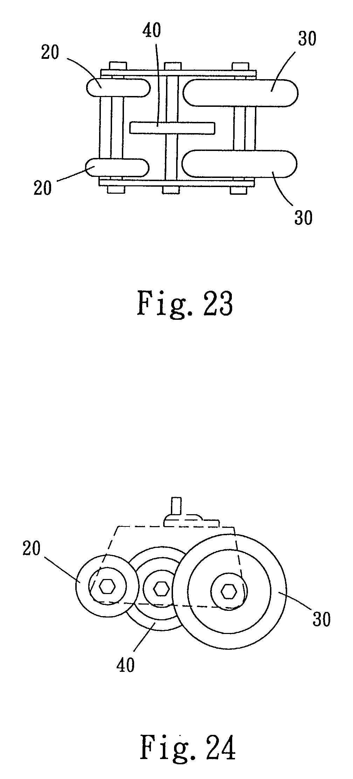

Fig. 23 is a bottom view of a miracle curb climber 100 according to a fifth embodiment of the present invention, and Fig. 24 is a side view of Fig. 23. The miracle curb climber 100 of the fifth embodiment is different from that of the first embodiment shown in Figs. 1 to 6 in that it includes a pair of front pilot wheels 20, a single relaying wheel 40, and a pair of main land-contacting wheels 30, and the relaying wheel 40 is longitudinally and transversely located between the pairs of the front pilot wheels 30 and the main land-contacting wheels 40 to overlap front and rear edges with rear edges of the front pilot wheels 20 and front edges of the main land-contacting wheels 30, respectively.

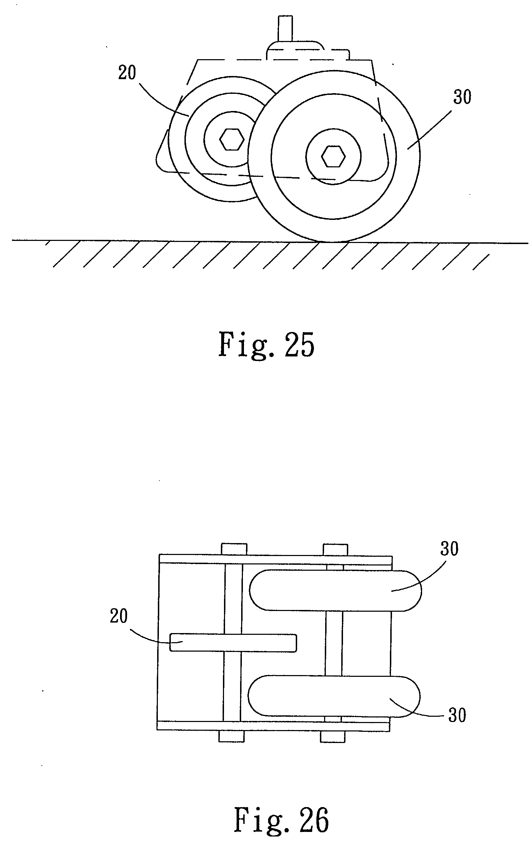

Fig. 25 is a side view of a miracle curb climber 100 according to a sixth embodiment of the present invention, and Fig. 26 is a bottom view of Fig. 25. The miracle curb climber 100 of the sixth embodiment is different from that of the fifth embodiment shown in Figs. 23 and 24 in that it includes only one single front pilot wheel 20 and a pair of main land-contacting wheels 30 while the relaying wheel 40 is omitted. Both the fifth and the sixth embodiments enable a reduced angle of climbing and stable steering of the miracle curb climbers 100 to climb up a steep obstacle.

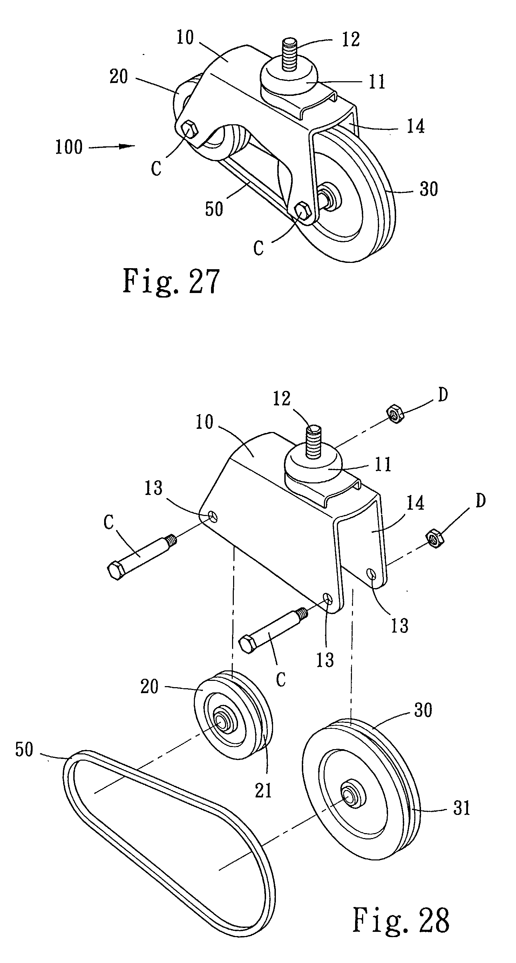

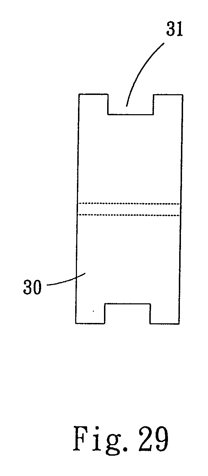

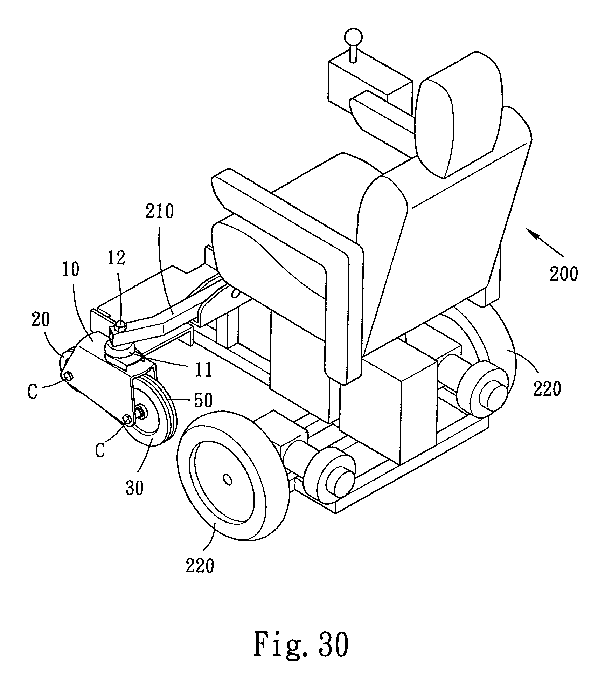

A seventh embodiment of the present invention is shown in Figs. 27 to 30. The seventh embodiment is different from the first embodiment in that it omits the relaying wheels 40 and that the front pilot wheel 20 and the main land-contacting wheel 30 are provide along their treads with at least one annular groove 21 and 31, respectively, as shown in Figs. 28 and 29, for a belt 50 to locate therein and tightly wind around the front pilot wheel 20 and the main land-contacting wheel 30. In this manner, the front pilot wheel 20 and the main land-contacting wheel 30 are caused to rotate synchronously. The seventh embodiment of the present invention also enabies a reduced angle of climbing α for the front pilot wheel 20 to easily climb over the top of the raised obstacle E. The belt 50 further increases the stability of the main land-contacting wheel 30 in the course of climbing over the obstacle E.

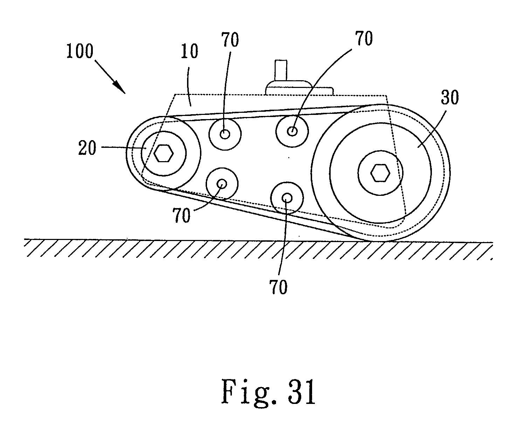

Fig. 31 is a side view of a miracle curb climber 100 according to an eighth embodiment of the present invention. As shown, the eighth embodiment also includes a front pilot wheel 20 and a main land-contacting wheel 30 without any relaying wheel 40. However, this embodiment is different from the seventh embodiment in that its casing 10 is internally provided with an upper and a lower row of supporting rollers 70, so that sections of the belt 50 between the front pilot wheel 20 and the main land-contacting wheel 30 are slidably supported on the upper and the lower rollers 70 without becoming collapsed when the belt 50 is in contact with the raised obstacle E. In other words, the supporting rollers 70 enable the belt 50 to have an increased tension to protect the walking aid 200 in moving or crossing an obstacle E from skidding off the road or becoming stuck at the obstacle E.

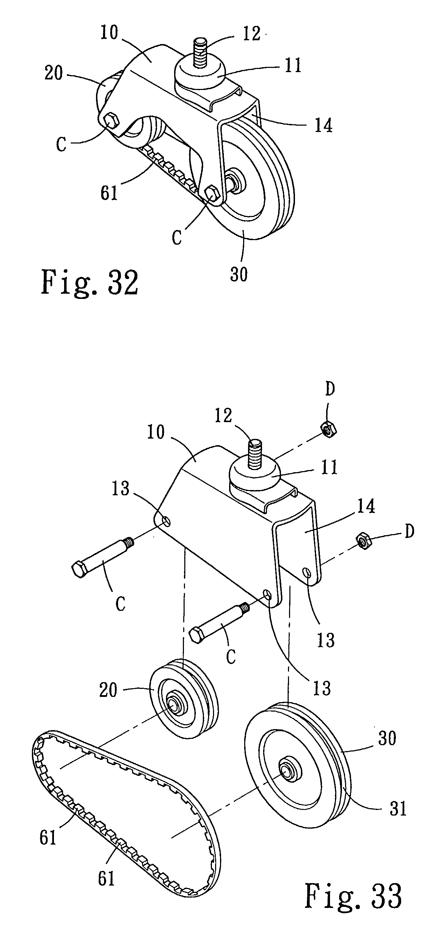

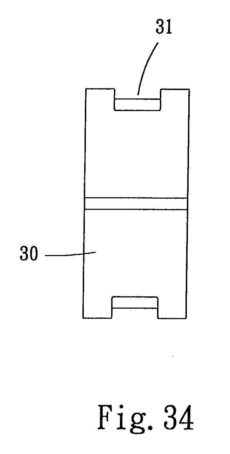

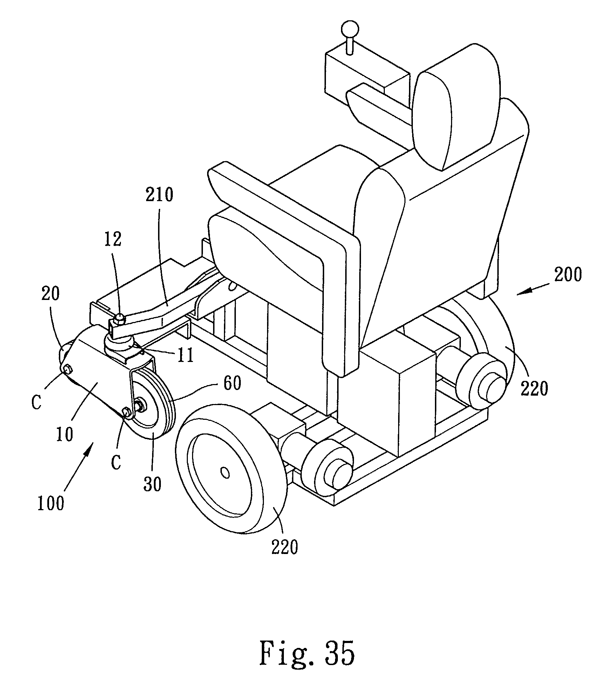

Figs. 32 and 33 are assembled and exploded perspective views, respectively, of a miracle curb climber 100 according to a ninth embodiment of the present invention. The ninth embodiment is different from the seventh embodiment in that a toothed belt 60 is used to tightly wind around the front pilot wheel 20 and the main land-contacting wheel 30. The belt 60 is provided along an inner surface with a plurality of teeth 61 to provide an increased grip at the annular grooves 21, 31 on the treads of the front pilot wheel 20 and the main land-contacting wheel 30, respectively, as shown in Fig. 34, ensuring the two wheels 20 and 30 to rotate synchronously for the walking aid 200 to climb over the raised obstacle E more quickly and stably. Fig. 35 shows an example of mounting the miracle curb climber 100 of the ninth embodiment on the walking aid 200.

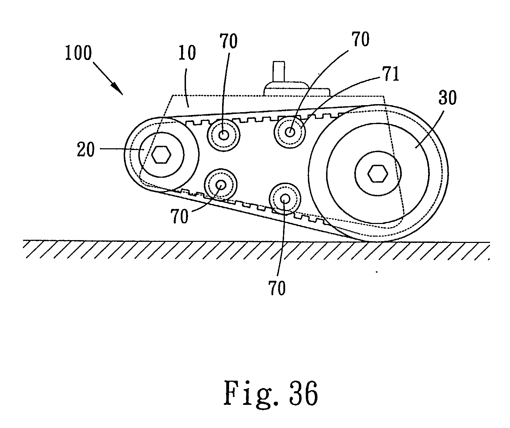

Fig. 36 is a side view of a miracle curb climber 100 according to a tenth embodiment of the present invention. The tenth embodiment is different from the ninth embodiment in that its casing 10 is internally provided with an upper and a lower row of supporting rollers 70, so that sections of the toothed belt 60 between the front pilot wheel 20 and the main land-contacting wheel 30 are slidably supported on the upper and the lower rollers 70 without becoming collapsed when the toothed belt 60 is in contact with the raised obstacle E. Moreover, the supporting rollers 70 are provided on their circumferential surfaces with at least an annular groove 71 each, into which the teeth 61 on the belt 60 are engaged. In other words, the toothed belt 60 tightly wound around the annular groove 21 on the front pilot wheel 20, the annular grooves 71 on the supporting rollers 70, and the annular groove 31 on the main land-contacting wheel 30 is supported at increased number of points and has an increased tension to protect the walking aid 200 in moving or crossing an obstacle E from skidding off the road or becoming stuck at the obstacle E.

The miracle curb climber of the present invention has simple structure that enables manufacture at low cost, and could be conveniently connected to conventional walking aids, such as a handcart, a wheelchair, an electric wheelchair, and a powered walking-aid chair, at considerably low labor and time costs to largely reduce users' burden. The miracle curb climber of the present invention is designed to reduce the angle of climbing for the entire walking aid equipped with the present invention to successfully cross over obstacles of different heights and is therefore a design meeting the body engineering.

The present invention has been described with a preferred embodiment thereof and it is understood that many changes and modifications in the described embodiment can be carried out without departing from the scope and the spirit of the invention that is intended to be limited only by the appended claims.

## Claims

1. A miracle curb climber, comprising:
a casing defining an internal mounting space and being provided at a top with at least a connecting bolt for screwing to an axle of a walking aid;
at least one front pilot wheel being mounted at a front end of said internal mounting space defined in said casing;
at least one main land-contacting wheel being mounted at a rear end of said internal mounting space defined in said casing; and
at least one relaying wheel being mounted in said casing to locate between said front pilot wheel and said main land-contacting wheel; and
said front pilot wheel and said relaying wheel having diameters smaller than that of said main land-contacting wheel and being suspended in the air to reduce an angle of climbing for said main land-contacting wheel approaching to a raised obstacle to easily climb up and cross over said obstacle.

2. The miracle curb climber as claimed in claim 1, wherein said casing is provided at the top with a connecting seat, from which said connecting bolt upward projects.

3. The miracle curb climber as claimed in claim 1, wherein said casing is provided at two sidewalls with a plurality of pairs of mounting holes, and said front pilot wheel, said relaying wheel, and said main land-contacting wheel being mounted in said casing by means of supporting shafts extended through said pairs of mounting holes.

4. The miracle curb climber as claimed in claim 1, wherein the number of said relaying wheel is two and said two relaying wheels are provided in a pair to transversely locate at two sides of said front pilot wheel and said main land-contacting wheel, and front edges and rear edges of said relaying wheels overlapping a rear edge of said front pilot wheel and a front edge of said main land-contacting wheel, respectively.

5. The miracle curb climber as claimed in claim 1, wherein the number of said relaying wheel is five and said five relaying wheels include a first wheel pair provided behind and at two sides of said front pilot wheel, a second wheel pair provided in front of and at two sides of said main land-contacting wheel, and a last wheel located between said first and said second wheel pairs.

6. The miracle curb climber as claimed in claim 1, wherein said front pilot wheel, said relaying wheel, and said main land-contacting wheel are sequentially arranged in one line.

7. The miracle curb climber as claimed in claim 1, wherein the number of both said front pilot wheel and said main land-contacting wheel is two, and the number of said relaying wheel is one, and said one relaying wheel being located between said two front pilot wheels and said two main land-contacting wheels with front and rear edges of said relaying wheel overlapping rear edges of said front pilot wheels and front edges of said main land-contacting wheels, respectively.

8. A miracle curb climber, comprising:
a casing defining an internal mounting space and being provided at a top with at least a connecting bolt for screwing to an axle of a walking aid;
at least one front pilot wheel being mounted at a front end of said internal mounting space defined in said casing; and
at least one main land-contacting wheel being mounted at a rear end of said internal mounting space defined in said casing with a front edge of said main land-contacting wheel overlapping a rear edge of said front pilot wheel; and
said front pilot wheel having a diameter smaller than that of said main land-contacting wheel and being suspended in the air to reduce an angle of climbing for said main land-contacting wheel approaching to a raised obstacle to easily climb up and cross over said obstacle.

9. The miracle curb climber as claimed in claim 8, wherein the number of said front pilot wheel is two and the number of said main land-contacting wheel is one, and said two front pilot wheels are located at two sides of said only one main land-contacting wheel.

10. The miracle curb climber as claimed in claim 8, wherein the number of said front pilot wheel is one and the number of said main land-contacting wheel is two, and said two main land-contacting wheels are located at two sides of said only one front pilot wheel.

11. The miracle curb climber as claimed in claim 1, wherein said casing of said miracle curb climber is connected to a front axle of said walking aid and said walking aid is rear-wheel driven.

12. The miracle curb climber as claimed in claim 1, wherein said casing of said miracle curb climber is connected to a rear axle of said walking aid and said walking aid is front-wheel driven.

13. The miracle curb climber as claimed in claim 8, wherein said casing of said miracle curb climber is connected to a front axle of said walking aid and said walking aid is rear-wheel driven.

14. The miracle curb climber as claimed in claim 8, wherein said casing of said miracle curb climber is connected to a rear axle of said walking aid and said walking aid is front-wheel driven.

15. The miracle curb climber as claimed in claim 1, wherein said walking aid is selected from the group consisting of wheelchair, electric wheelchair, handcart, and any other apparatus adapted to aid in walking.

16. The miracle curb climber as claimed in claim 8, wherein said walking aid is selected from the group consisting of wheelchair, electric wheelchair, handcart, and any other apparatus adapted to aid in walking.

17. A miracle curb climber, comprising:
a casing defining an internal mounting space and being provided at a top with at least a connecting bolt for screwing to an axle of a walking aid;
at least one front pilot wheel being mounted at a front end of said internal mounting space defined in said casing, and being provided along a tread thereof with at least one annular groove;
at least one main land-contacting wheel being mounted at a rear end of said internal mounting space defined in said casing, and being provided along a tread thereof with at least one annular groove; and
at least one belt located in said annular grooves of said front pilot wheel and of said main land-contacting wheel to wind around said front pilot wheel and said main land-contacting wheel; and
said front pilot wheel having a diameter smaller than that of said main land-contacting wheel and being suspended in the air to reduce an angle of climbing for said main land-contacting wheel approaching to a raised obstacle to easily climb up and cross over said obstacle.

18. The miracle curb climber as claimed in claim 17, wherein said casing is provided at the top with a connecting seat, from which said connecting bolt upward projects.

19. The miracle curb climber as claimed in claim 17, wherein said casing is internally provided between said front pilot wheel and said main land-contacting wheel with a plurality of upper and lower supporting rollers to slidably support said belt thereon and thereby give said belt an increased tension to prevent easy collapse of said belt when said belt is in contact with said obstacle.

20. The miracle curb climber as claimed in claim 17, wherein said belt is a toothed belt.

21. The miracle curb climber as claimed in claim 19, wherein said belt is a toothed belt.

22. The miracle curb climber as claimed in claim 20, wherein said toothed belt is provided along an inner surface thereof with a plurality of teeth.

23. The miracle curb climber as claimed in claim 21, wherein said toothed belt is provided along an inner surface thereof with a plurality of teeth.

24. The miracle curb climber as claimed in claim 21, wherein said supporting rollers are provided along respective circumferential surfaces with an annular groove, in which said toothed belt is located to obtain an increased tension to protect said toothed belt from easy collapse when said toothed belt is in contact with said obstacle.

25. The miracle curb climber as claimed in claim 17, wherein said casing of said miracle curb climber is connected to a front axle of said walking aid and said walking aid is rear-wheel driven.

26. The miracle curb climber as claimed in claim 17, wherein said casing of said miracle curb climber is connected to a rear axle of said walking aid and said walking aid is front-wheel driven.

27. The miracle curb climber as claimed in claim 17, wherein said walking aid is selected from the group consisting of wheelchair, electric wheelchair, handcart, and any other apparatus adapted to aid in walking.
